# EUROPEAN PATENT APPLICATION

(11) **EP 3 869 760 A1**
(43) Date of publication of application: **25.08.2021**
(21) Application number: 18937362.4
(22) Date of filing: 24.10.2018
(51) Int. Cl.: H04L 29/06

(54) **EXTENDED CONNECTION METHOD AND EXTENDED CONNECTION SYSTEM FOR BLUETOOTH DEVICES**

(30) Priority: 15.10.2018 CN 201811198916
(71) Applicant: XYLINK TECHNOLOGY CO., LTD., Beijing 100089 (CN)
(72) Inventor: LI, Yuxuan, Beijing 100089 (CN)
(74) Representative: Huang, Liwei
(86) International application number: PCT/CN2018/111623
(87) International publication number: WO 2020/077658

(57) **Abstract**

The present application relates to an extended connection method and an extended connection system both for Bluetooth devices. The extended connection method includes: initializing a first Bluetooth device, and setting the first Bluetooth device to a master mode; establishing a first Bluetooth connection between the first Bluetooth device and a second Bluetooth device; and monitoring whether there is an external Bluetooth device connected to the second Bluetooth device or not, herein under the condition that a second Bluetooth connection is established between the external Bluetooth device and the second Bluetooth device, data transmission is carried out between the first Bluetooth device and the external Bluetooth device through the first Bluetooth connection and the second Bluetooth connection. The extended Bluetooth connection provided in embodiments of the present application can achieve providing a required data transmission channel and corresponding node control between two or more Bluetooth devices, is therefore adaptable to more complicated application scenarios and provides solutions meeting user requirements better.

## Description

### Technical Field

The present application relates to the field of extended connection and data transmission between multiple Bluetooth devices, in particular to an extended connection method and an extended connection system both for Bluetooth devices.

### Background

At present, on-board central control systems with comprehensive processing capabilities are generally provided in vehicles. In addition, with the wide application of Bluetooth devices in various devices such as smart terminals, portable devices, and wearable devices, the on-board central control systems may generally provide on-board Bluetooth modules to conveniently establish Bluetooth connections with the various Bluetooth devices. The on-board Bluetooth modules and Bluetooth modules of mobile phones are the same in the implementation mechanism, and have the same emission system. Generally speaking, on-board Bluetooth is an in-car wireless communication system designed and developed based on a wireless Bluetooth technology, is mainly used to connect the on-board Bluetooth modules to the mobile phones through the Bluetooth connections, so as to realize various applications such as calls, audio playing, and voice navigation in vehicle driving environments.

In some existing technical solutions, in order to realize the Bluetooth connection between a mobile phone and multiple Bluetooth devices, the mobile phone is externally connected to a Bluetooth interface circuit for connection switching. For example, the mobile phone external Bluetooth interface circuit with two sets of Bluetooth receiving circuits and switches is used to achieve a communication connection between the mobile phone and a Bluetooth headset as well as a communication connection between the mobile phone and an on-board Bluetooth device. However, according to the technical solutions, the mobile phone can only establish a connection with one of the Bluetooth devices at the same time, and data transmission between the two Bluetooth devices cannot be realized.

In addition, in some application scenarios, users not only need data transmission between two Bluetooth devices, but also need to use more than two Bluetooth devices to perform specific operations based on considerations such as application convenience and privacy protection. However, there are no corresponding methods to solve the above-mentioned problems in the related art.

The information disclosed in the Background section of the present application is only intended to deepen the understanding of the general background of the present application, and should not be regarded as a recognition or any form of implication that the information constitutes the related art already known to those skilled in the art.

### Summary

To solve the above-mentioned problems, the present application relates to an extended connection method for Bluetooth devices. The extended connection method includes: initializing a first Bluetooth device, and setting the first Bluetooth device to a master mode; establishing a first Bluetooth connection between the first Bluetooth device and a second Bluetooth device; and monitoring whether there is an external Bluetooth device connected to the second Bluetooth device or not, herein under the condition that a second Bluetooth connection is established between the external Bluetooth device and the second Bluetooth device, data transmission is carried out between the first Bluetooth device and the external Bluetooth device through the first Bluetooth connection and the second Bluetooth connection.

Alternatively, in the extended connection method according to an embodiment of the present application, data transmission carried out between the first Bluetooth device and the external Bluetooth device through the first Bluetooth connection and the second Bluetooth connection includes the following steps.

A data stream is transmitted to the second Bluetooth device from the external Bluetooth device through the second Bluetooth connection.

The received data stream is processed at the second Bluetooth device.

The processed data stream is transmitted to the first Bluetooth device from the second Bluetooth device through the first Bluetooth connection.

Alternatively, in the extended connection method according to an embodiment of the present application, the first Bluetooth device is set to a master mode, the second Bluetooth device is set to a slave mode, and the external Bluetooth device is set to a master mode.

Alternatively, in the extended connection method according to an embodiment of the present application, the first Bluetooth connection is a transparent serial port connection based on a Serial Port Profile (SPP) protocol, and the second Bluetooth connection is a connection based on an Advanced Audio Distribution Profile (A2DP) protocol.

Alternatively, in the extended connection method according to an embodiment of the present application, the first Bluetooth connection and the second Bluetooth connection are both connections based on the A2DP protocol.

Alternatively, in the extended connection method according to an embodiment of the present application, the step of processing the received data stream at the second Bluetooth device includes: performing data compression on the received data stream by the second Bluetooth device.

Alternatively, in the extended connection method according to an embodiment of the present application, transmitting the processed data stream to the first Bluetooth device from the second Bluetooth device through the first Bluetooth connection includes the following steps.

A handshake request is sent to the first Bluetooth device from the second Bluetooth device.

A successful handshake between the first Bluetooth device and the second Bluetooth device succeed is confirmed.

The compressed data stream is transmitted to the first Bluetooth device from the second Bluetooth device.

Alternatively, in the extended connection method according to an embodiment of the present application, establishing the first Bluetooth connection between the first Bluetooth device and the second Bluetooth device that is in the salve mode includes the following steps.

The first Bluetooth device sends a connection request message according to prestored identification information of the second Bluetooth device.

The second Bluetooth device sends a corresponding connection response message when receiving the connection request message.

The first Bluetooth device sends a Frequency Hopping Synchronization (FHS) data packet when receiving the connection response message from the second Bluetooth device.

Alternatively, in the extended connection method according to an embodiment of the present application, establishing the first Bluetooth connection between the first Bluetooth device and the second Bluetooth device that is in the salve mode includes the following steps.

The first Bluetooth device sends an inquiry message.

The second Bluetooth device enters an inquiry scan state, and sends an inquiry response message when receiving the inquiry message sent from the first Bluetooth device.

The first Bluetooth device establishes a connection with the second Bluetooth device when receiving the inquiry response message from the second Bluetooth device.

According to another aspect of the present application, an extended connection system for Bluetooth devices is further provided. The extended connection system includes: a first Bluetooth device set to a master mode, a second Bluetooth device set to a slave mode, and an external Bluetooth device set to a master mode. A first Bluetooth connection is established between the first Bluetooth device and the second Bluetooth device, a second Bluetooth connection is established between the external Bluetooth device and the second Bluetooth device, and data transmission is carried out between the first Bluetooth device and the external Bluetooth device through the first Bluetooth connection and the second Bluetooth connection.

Alternatively, in the extended connection system according to an embodiment of the present application, the external Bluetooth device transmits a data stream to the second Bluetooth device through the second Bluetooth connection; the second Bluetooth device processes the received data stream; and the second Bluetooth device transmits the processed data stream to the first Bluetooth device through the first Bluetooth connection.

Alternatively, in the extended connection system according to an embodiment of the present application, the first Bluetooth connection is a transparent serial port connection based on an SPP protocol, and the second Bluetooth connection is a connection based on an A2DP protocol.

Alternatively, in the extended connection system according to an embodiment of the present application, the second Bluetooth device is configured to perform data compression on the received data stream.

Alternatively, in the extended connection system according to an embodiment of the present application, the second Bluetooth device sends a handshake request to the first Bluetooth device, a handshake between the first Bluetooth device and the second Bluetooth device succeeds, and the second Bluetooth device transmits the compressed data stream to the first Bluetooth device.

Alternatively, in the extended connection system according to an embodiment of the present application, the first Bluetooth device sends a connection request message according to identification Information of the second Bluetooth device, the second Bluetooth device sends a corresponding connection response message when receiving the connection request message, and the first Bluetooth device sends an FHS data packet when receiving the connection response message from the second Bluetooth device.

Alternatively, in the extended connection system according to an embodiment of the present application, the identification information of the second Bluetooth device is prestored in the first Bluetooth device.

Alternatively, in the extended connection system according to an embodiment of the present application, the first Bluetooth device is provided with a slot for accommodating the second Bluetooth device, a PIN component is arranged in the slot, the second Bluetooth device is provided with a jack matching the PIN component, and the first Bluetooth device obtains the identification information of the second Bluetooth device by means of the PIN component.

Alternatively, in the extended connection system according to an embodiment of the present application, the second Bluetooth device is a Bluetooth headset.

Alternatively, in the extended connection system according to an embodiment of the present application, the first Bluetooth device sends an inquiry message, the second Bluetooth device enters an inquiry scan state, and sends an inquiry response message when receiving the inquiry message sent from the first Bluetooth device, and the first Bluetooth device establishes a connection with the second Bluetooth device when receiving the inquiry response message from the second Bluetooth device.

According to yet another aspect of the embodiments of the present application, a computer readable storage medium is further provided. The computer readable storage medium stores a computer program for performing the foregoing extended connection method.

Compared with the structure of establishing a connection as well as performing data transmission between only two Bluetooth devices in the related art, the extended Bluetooth connection provided in the embodiments of the present application can achieve providing a required data transmission channel and corresponding node control between two or more Bluetooth devices, and is therefore adaptable to more complicated application scenarios and provides solutions meeting user requirements better.

### Brief Description of the Drawings

The accompanying drawings constituting a part of the present application are used to provide a further understanding of this application, so that other features, objectives, and advantages of this application become more apparent. The schematic drawings and descriptions thereof in the embodiments of the present application are intended to explain this application, and do not constitute an improper limitation on this application. In the drawings:
Fig. 1 is a schematic block diagram of an extended connection system 100 for Bluetooth devices according to an embodiment of the present application.
Fig. 2 is a flowchart of an extended connection method for Bluetooth devices according to an embodiment of the present application.
Fig. 3 is a flowchart of audio data transmission between a Bluetooth headset and an on-board Bluetooth device through an A2DP connection according to an embodiment of the present application.
Fig. 4 is an example flowchart of an extended connection system for transmitting audio stream data through a first Bluetooth connection according to an embodiment of the present application.
Fig. 5 illustrates a handler of the Bluetooth headset side in the first Bluetooth connection.
Fig. 6 illustrates a handler of the on-board Bluetooth device side in the first Bluetooth connection.

### Detailed Description of the Embodiments

In order to make the solutions of the present application better understood by those skilled in the art, the technical solutions in the embodiments of the present application will be clearly and completely described below in combination with the drawings in the embodiments of the present application. It is apparent that the described embodiments are not all embodiments but part of embodiments of the present application. All other embodiments obtained by those of ordinary skilled in the art on the basis of the embodiments in the present application without creative work shall fall within the scope of protection of the present application.

In addition, terms "mount", "set", "provided with", "connect", "configured to" and the like should be broadly understood. For example, the terms may refer to fixed connection, detachable connection, or integration. The terms may refer to mechanical connection or electrical connection. The terms may also refer to direct connection, or indirect connection through a medium, or communication in two devices, or elements or components. Those of ordinary skill in the art can understand specific implications of the above terms in the present application according to specific situations.

It is to be noted that the embodiments in the present application and the features in the embodiments may be combined under the condition of no conflicts. The present application is described below with reference to the drawings and in conjunction with the embodiments in detail.

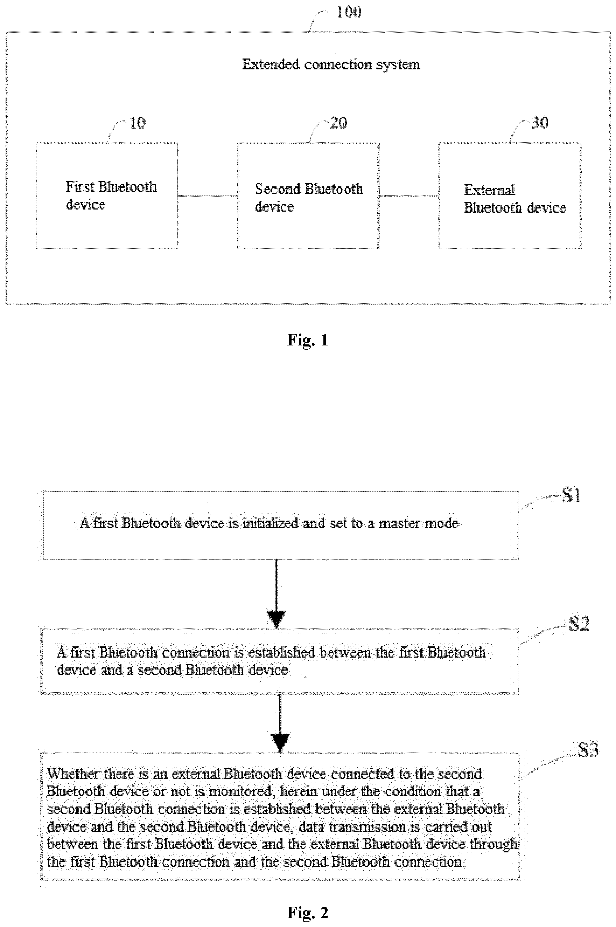

According to an aspect of the present application, an extended connection system 100 for Bluetooth devices is provided. As shown in Fig. 1, the extended connection system 100 includes: a first Bluetooth device 10 set to a master mode, a second Bluetooth device 20 set to a slave mode, and an external Bluetooth device 30 set to a master mode. A first Bluetooth connection is established between the first Bluetooth device 10 and the second Bluetooth device 20, a second Bluetooth connection is established between the external Bluetooth device 30 and the second Bluetooth device 20, and data transmission is carried out between the first Bluetooth device 10 and the external Bluetooth device 30 through the first Bluetooth connection and the second Bluetooth connection.

In some embodiments of the present application, take the Bluetooth extended connection system composed of an on-board Bluetooth device, a Bluetooth headset, and a smart phone with a Bluetooth function as an example. The on-board Bluetooth device is an example of the first Bluetooth device 10, and the Bluetooth headset is an example of the second Bluetooth device 20. The smart phone with the Bluetooth function is taken as an example of the external Bluetooth device 30.

Herein, the term "external Bluetooth device" indicates that the Bluetooth device may be any device (the smart phone in this example) used by a user as long as the device has a general Bluetooth function. The external Bluetooth device can establish the second Bluetooth connection with the second Bluetooth device (the Bluetooth headset in this example) that is in a match mode through a common PAGE connection. In the above example, that is, the smart phone may establish a connection with the Bluetooth headset within a communication distance by a matching connection (based on known identification information of a corresponding device), inquiry scan or any other appropriate means. Based on the Bluetooth connection, the on-board Bluetooth device which is taken as an example of the first Bluetooth device can extra establish the first Bluetooth connection with the Bluetooth headset to realize an extended Bluetooth connection. Herein, the term "extended connection" means that compared with a conventional Bluetooth connection between two devices, a Bluetooth connection between two or more Bluetooth devices is achieved according to the technical solutions of the embodiments of the present application, thereby providing extension on Bluetooth links, extension on data transmission modes, and resultant extension on compliance for complicated application scenarios.

Compared with the structure of establishing a connection as well as performing data transmission between only two Bluetooth devices in the related art, the extended Bluetooth connection provided in the embodiments of the present application can achieve providing a required data transmission channel and corresponding node control between two or more Bluetooth devices, and is therefore adaptable to more complicated application scenarios and provides solutions meeting user requirements better.

Based on some embodiments of the present application, the Bluetooth headset may be set to the slave mode, which can establish a connection with any external Bluetooth device that is set to the master mode. In some application examples, the external Bluetooth device may be a smart phone of a user. The existing smart phone may generally provide a support to an A2DP audio transmission protocol.

A2DP is short for Advanced Audio Distribution Profile, which is adaptable to transmission of high-quality audio data, and specifically refers to transmitting high-quality single-track or stereo audio data using an Asynchronous Connectionless (ACL) link established at a Logical Link Control and Adaptation Protocol (L2CAP) level. The connection between the smart phone and the Bluetooth headset is established based on the A2DP protocol, and a chip in the headset can be used to stack data to realize high-definition presentation of the transmitted audio data.

In the above-mentioned embodiments, in the cases that the Bluetooth connection has been established since the Bluetooth headset is placed in a car, the user holds the smart phone to enter a communication range of the Bluetooth headset, or the user carries both the Bluetooth headset and the smart phone, the on-board Bluetooth device may establish a connection with the Bluetooth headset by the following process when the user starts the car and an on-board system is powered on.

According to the general process, the connection between two Bluetooth devices is carried out as follows. First, a master unit uses a General Inquiry Access Code (GIAC) and a Dedicated Inquiry Access Code (DIAC) to inquire the Bluetooth devices within a certain range (an inquiry sub-state). If a nearby Bluetooth device listens for these inquiries (an inquiry scan sub-state), it may respond to the master unit by sending its own address and clock information (an FHS data packet) to the master unit (an inquiry response sub-state). After these messages are sent, a slave unit starts to listen for a page message from the master unit (page scan). After discovering the Bluetooth devices within the range, the master unit may page these devices (a page sub-state) to establish connections. If the slave unit in the page scan state is paged by the master unit, the slave unit may immediately respond with its own Device Access Code (DAC) (a slave response sub-state). After receiving the response from the slave unit, the master unit may transmit its real-time clock, Bluetooth Device Address (BD_ADDR), BCH (Bose, Chaudhuri, Hocquenghem) parity bits, and device categories (an FHS data packet) as a response. After the slave unit receives the FHS data packet, the master unit and the slave unit immediately enter a connection state.

In the process of establishing the connection between the Bluetooth devices, the following states are mainly involved.

Page: This sub-state is used by the master unit to activate and connect the slave unit. The master unit sends the page message by transmitting the DAC of the slave unit in different frequency hopping channels.

Page scan: In this sub-state, the slave unit listens for its own DAC during a window scan survival time. In the scan window, the slave unit listens with a single frequency hopping (derived from its page frequency hopping sequence).

Slave response: The slave unit, in this sub-state, responds to the page message of the corresponding master unit. If the slave unit in the page scan sub-state is related to the page message of the master unit, it enters this state. The slave unit enters a connection state after receiving the FHS data packet from the master unit.

Master response: The master unit enters this sub-state after receiving the response of the slave unit to its page message. If the slave unit replies to the master unit, the master unit sends the FHS data packet to the slave unit, and then enters the connection state.

Inquiry: Inquiry is used to discover identity of a neighboring Bluetooth device. A discovery unit collects an address of the Bluetooth device and clocks of all units responding to the inquiry message.

Inquiry scan: In this state, the Bluetooth device listens for inquiries from other devices. At this time, a scanning device may listen for the GIAC or the DIAC.

Inquiry response: For an inquiry, only the slave unit can respond and the master unit cannot. The slave unit responds with the FHS data packet which contains the device access code, internal clocks and some other information of the slave unit.

A typical page process is performed in the following steps.
1) One device (source) pages another device (sink), and here it is in a Page state.
2) The sink device receives the page, and here it is in a Page scan state.
3) The sink device sends a reply to the source device, and here it is in a Slave Response state.
4) The source device sends an FHS packet to the sink device, and here it is in a Master Response state.
5) The sink device sends a second reply to the source device, and here it is in a Slave Response state.
6) The sink device and the source device switch and parameters of a source channel are used, and here they are in a Master Response state and a Slave Response state.

In some embodiments, the first Bluetooth connection established between the first Bluetooth device (an on-board Bluetooth device) and the second Bluetooth device (a Bluetooth headset) is a transparent serial port connection based on a Serial Port Profile (SPP) protocol, and the second Bluetooth connection established between the second Bluetooth device (the Bluetooth headset) and an external Bluetooth device (a smart phone) is a connection based on an A2DP protocol.

In some embodiments, during use of the extended connection system for Bluetooth devices according to the present application, for example, under the circumstance that a user needs to play an audio of a mobile terminal by means of a loudspeaker at an on-board device terminal, the extended connection system for Bluetooth devices according to the present application can appropriately provide connection modes meeting specific requirements of the user according to specific requirements of application scenarios.

According to some embodiments, for the circumstance that the user needs to play an audio of a mobile terminal by means of a loudspeaker at an on-board device terminal, the extended connection system of the present application is constructed to use different connection protocols to respectively establish the first Bluetooth connection between the first Bluetooth device (the on-board Bluetooth device) and the second Bluetooth device (the Bluetooth headset), and the second Bluetooth connection between the second Bluetooth device (the Bluetooth headset) and the external Bluetooth device (the smart phone).

The external Bluetooth device as any device of the user may be various types of terminal devices or fixed devices, and thus, the second Bluetooth connection between the external Bluetooth device and the Bluetooth headset should be a conventional connection mode between known Bluetooth devices. This connection is a Bluetooth connection that is not affected by the extended connection system of the present application. Generally, the second Bluetooth connection is a connection based on the A2DP protocol, and is used to transmit a high-quality audio stream between the external Bluetooth device and the Bluetooth headset.

In this case, as described above, the external Bluetooth device, taking the user's smart phone as an example, is set to the master mode, and serves as a source of the audio stream data in the A2DP protocol; and the Bluetooth headset is set to the slave mode and serves as a sink of audio stream data in the A2DP protocol.

On the other hand, since the Bluetooth headset (the second Bluetooth device) serving as an intermediate node is set to the slave mode, the A2DP protocol cannot be used to transmit the audio stream in the first Bluetooth connection established between the Bluetooth headset and the on-board Bluetooth device that is in the master mode. This is because the Bluetooth headset is set as the sink of the audio stream data, and the on-board Bluetooth device is set as the source of the audio stream data.

In view of the above cases, in some embodiments of the present application, the transparent serial port connection based on the SPP protocol is used as the first Bluetooth connection.

Fig. 4 is an example flowchart of an extended connection system for transmitting audio stream data through a first Bluetooth connection according to an embodiment of the present application.

At S41 of the flowchart shown in Fig. 4, an on-board Bluetooth device confirms whether a link (namely the first Bluetooth connection) between it and a Bluetooth headset is successfully established or not.

After a serial port connection established between the on-board Bluetooth device and the Bluetooth headset is confirmed, the audio stream data received from the external Bluetooth device before may be transmitted from the Bluetooth headset side to the on-board Bluetooth device side.

At S42, the Bluetooth headset detects whether to output an audio stream.

If the detection result is YES, then at S43, the Bluetooth headset compresses the audio stream data.

At S44, the Bluetooth headset sends an audio transmission handshake request to the on-board Bluetooth device.

At S45, the on-board Bluetooth device confirms whether the handshake succeeds or not, and sends a message indicating "audio transmission is ready" if the handshake succeeds.

At S46, the Bluetooth headset sends audio data to the on-board Bluetooth device.

In view of the foregoing embodiment, Fig. 5 shows a handler of the Bluetooth headset side in the first Bluetooth connection, which includes the steps of establishing an audio transmission handshake with the on-board Bluetooth device side, compressing the audio stream data received from the external Bluetooth device, and sending the compressed audio stream data to the on-board Bluetooth device; Fig. 6 shows a handler of the on-board Bluetooth device side in the first Bluetooth connection, which includes establishing an audio transmission handshake from the on-board Bluetooth device side to the Bluetooth headset side, receiving the compressed audio stream data and performing a decoding process, and playing the audio using a loudspeaker on the on-board Bluetooth device side.

In another application scenario, for example, the Bluetooth headset user does not want to send an audio from the smart phone terminal to the on-board device for playing the audio by a loudspeaker, but want to send an audio (which may be a local audio, or an audio received through FM broadcasting, or the Internet) on the on-board device side to the Bluetooth headset for playing. The precondition for this application scenario is that the Bluetooth headset is worn by the user. In such case, as set forth, the first Bluetooth connection established between the first Bluetooth device (the on-board Bluetooth device) and the second Bluetooth device (the Bluetooth headset), and the second Bluetooth connection established between the second Bluetooth device (the Bluetooth headset) and the external Bluetooth device (the smart phone) may be both connections based on the A2DP protocol.

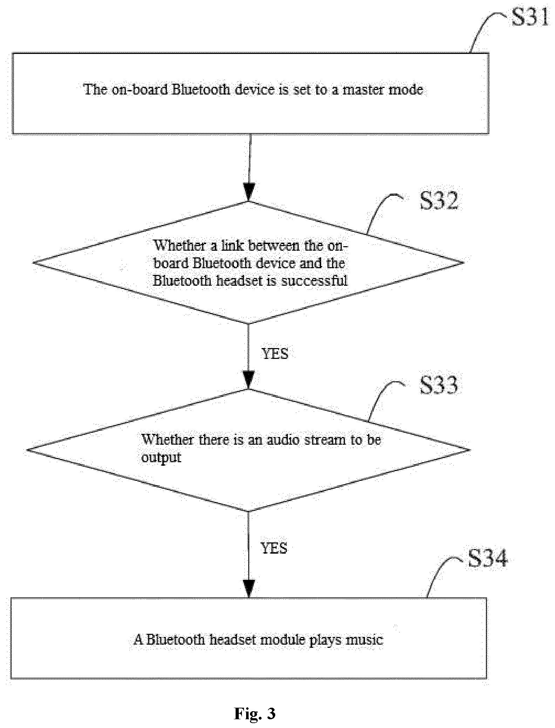

As shown in Fig. 3, at S31, the on-board Bluetooth device is set as an A2DP data transmission source (A2DP source).

At S32, the Bluetooth headset detects whether a link between the on-board Bluetooth device and the Bluetooth headset is successfully established, and here the Bluetooth headset is set as an A2DP sink.

At S33, the on-board Bluetooth device detects whether there is an audio stream to be output.

At S34, the Bluetooth headset receives the audio stream data transmitted from the on-board Bluetooth device, and uses a built-in speaker thereof to play music.

It is apparent that compared with the structure of establishing a connection as well as performing data transmission between only two Bluetooth devices in the related art, the extended connection provided in the embodiments of the present application can achieve providing a required data transmission channel and corresponding node control between two or more Bluetooth devices, herein the extended/added Bluetooth link can establish a connection based on an appropriate Bluetooth protocol, and is therefore adaptable to specific application scenarios and provides data transmission solutions meeting user's specific requirements.

According to another aspect of the present application, an extended connection method for Bluetooth devices is further provided. As shown in Fig. 2, the extended connection method includes the following steps.

At S1, a first Bluetooth device is initialized, and is set to a master mode.

At S2, a first Bluetooth connection is established between the first Bluetooth device and a second Bluetooth device.

At S3, whether there is an external Bluetooth device connected to the second Bluetooth device or not is monitored, herein under the condition that a second Bluetooth connection is established between the external Bluetooth device and the second Bluetooth device, data transmission is carried out between the first Bluetooth device and the external Bluetooth device through the first Bluetooth connection and the second Bluetooth connection.

In some embodiments, the on-board Bluetooth device is an example of the first Bluetooth device, the Bluetooth headset is an example of the second Bluetooth device, and the smart phone with a Bluetooth function is taken as an example of the external Bluetooth device.

In the extended connection method according to an embodiment of the present application, data transmission carried out between the first Bluetooth device and the external Bluetooth device through the first Bluetooth connection and the second Bluetooth connection includes the following steps.

A data stream is transmitted to the second Bluetooth device from the external Bluetooth device through the second Bluetooth connection.

The received data stream is processed at the second Bluetooth device.

The processed data stream is transmitted to the first Bluetooth device from the second Bluetooth device through the first Bluetooth connection.

Alternatively, in the extended connection method according to an embodiment of the present application, the first Bluetooth device is set to a master mode, the second Bluetooth device is set to a slave mode, and the external Bluetooth device is set to a master mode.

Alternatively, in the extended connection method according to an embodiment of the present application, the first Bluetooth connection is a transparent serial port connection based on an SPP protocol, and the second Bluetooth connection is a connection based on an A2DP protocol.

Alternatively, in the extended connection method according to an embodiment of the present application, the first Bluetooth connection and the second Bluetooth connection are both connections based on the A2DP protocol.

Alternatively, in the extended connection method according to an embodiment of the present application, the step of processing the received data stream at the second Bluetooth device includes: performing data compression on the received data stream by the second Bluetooth device.

Alternatively, in the extended connection method according to an embodiment of the present application, transmitting the processed data stream to the first Bluetooth device from the second Bluetooth device through the first Bluetooth connection includes the following steps.

A handshake request is sent to the first Bluetooth device from the second Bluetooth device.

A successful handshake between the first Bluetooth device and the second Bluetooth device succeed is confirmed.

The compressed data stream is transmitted to the first Bluetooth device from the second Bluetooth device.

Alternatively, in the extended connection method according to an embodiment of the present application, establishing the first Bluetooth connection between the first Bluetooth device and the second Bluetooth device that is in the salve mode includes the following steps.

The first Bluetooth device sends a connection request message according to identification information of the second Bluetooth device.

The second Bluetooth device sends a corresponding connection response message when receiving the connection request message.

The first Bluetooth device sends an FHS data packet when receiving the connection response message from the second Bluetooth device.

The FHS data packet includes information of real-time clock, BD_ADDR, BCH parity bits, and device categories of the first Bluetooth device.

In the extended connection method according to the above embodiments, the first Bluetooth device may prestore the identification information of the second Bluetooth device, or may be obtain the identification information of the second Bluetooth device in other ways before establishing the connection with the second Bluetooth device. The identification information may be a Media Access Control (MAC) address of the second Bluetooth device, a device name ID of the second Bluetooth device, or other information that can exclusively identify the Bluetooth device.

In some embodiments, the first Bluetooth device is an on-board Bluetooth device, and the second Bluetooth device is a Bluetooth handset. After the successful connection is established between the Bluetooth headset and the on-board Bluetooth device for more than one time, the identification information of the corresponding Bluetooth headset may be stored in the on-board Bluetooth device.

In some other embodiments, a slot for accommodating the Bluetooth headset is provided in the on-board Bluetooth device, and a PIN component is arranged in the slot, and can match with a jack of the Bluetooth headset; when the Bluetooth headset is disposed in the slot, data transmission can be carried out between the Bluetooth headset and the on-board Bluetooth device. Alternatively, the Bluetooth headset can be charged through the above-mentioned PIN component.

In some embodiments, when the Bluetooth headset is arranged in the slot, identification information of the Bluetooth headset itself is transmitted to the on-board Bluetooth device through the above-mentioned PIN component, the on-board Bluetooth device can obtain the identification information of the Bluetooth headset itself, to perform the above-mentioned PAGE operation according to the identification information, thereby establishing a connection between the on-board Bluetooth device and the Bluetooth headset.

Alternatively, in the extended connection method according to an embodiment of the present application, establishing the first Bluetooth connection between the first Bluetooth device and the second Bluetooth device that is in the salve mode includes the following steps.

The first Bluetooth device sends an inquiry message.

The second Bluetooth device enters an inquiry scan state, and sends an inquiry response message when receiving the inquiry message sent from the first Bluetooth device.

The first Bluetooth device establishes a connection with the second Bluetooth device when receiving the inquiry response message from the second Bluetooth device.

In the extended connection method according to the above-mentioned embodiments, no specific connection object is set for the first Bluetooth device, and the first Bluetooth device learns which Bluetooth devices may be connected (PAGE) in the surroundings by inquiry scan.

The above are only the preferred embodiments of the present application and not intended to limit the present application. For those skilled in the art, the present application can have various modifications and variations. Any modifications, equivalent replacements, improvements and the like within the spirit and principle of the present application shall fall within the scope of protection as defined in the appended claims of the present application.

### Industrial Applicability

Compared with the structure of establishing a connection as well as performing data transmission between only two Bluetooth devices in the related art, the extended Bluetooth connection provided in the embodiments of the present application can achieve providing a required data transmission channel and corresponding node control between two or more Bluetooth devices, and is therefore adaptable to more complicated application scenarios and provides solutions meeting user requirements better.

## Claims

1. An extended connection method for Bluetooth devices, comprising:
initializing a first Bluetooth device, and setting the first Bluetooth device to a master mode;
establishing a first Bluetooth connection between the first Bluetooth device and a second Bluetooth device; and
monitoring whether there is an external Bluetooth device connected to the second Bluetooth device or not, wherein under the condition that a second Bluetooth connection is established between the external Bluetooth device and the second Bluetooth device, data transmission is carried out between the first Bluetooth device and the external Bluetooth device through the first Bluetooth connection and the second Bluetooth connection.

2. The extended connection method as claimed in claim 1, wherein the steps of data transmission carried out between the first Bluetooth device and the external Bluetooth device through the first Bluetooth connection and the second Bluetooth connection comprise:
transmitting a data stream to the second Bluetooth device from the external Bluetooth device through the second Bluetooth connection;
processing the received data stream at the second Bluetooth device; and
transmitting the processed data stream to the first Bluetooth device from the second Bluetooth device through the first Bluetooth connection.

3. The extended connection method as claimed in claim 1, wherein the first Bluetooth device is set to a master mode, the second Bluetooth device is set to a slave mode, and the external Bluetooth device is set to a master mode.

4. The extended connection method as claimed in claim 2, wherein the first Bluetooth connection is a transparent serial port connection based on a Serial Port Profile (SPP) protocol, and the second Bluetooth connection is a connection based on an Advanced Audio Distribution Profile (A2DP) protocol.

5. The extended connection method as claimed in claim 2, wherein the first Bluetooth connection and the second Bluetooth connection are both connections based on the A2DP protocol.

6. The extended connection method as claimed in claim 3, wherein the step of processing the received data stream at the second Bluetooth device comprises:
performing data compression on the received data stream by the second Bluetooth device.

7. The extended connection method as claimed in claim 6, wherein the steps of transmitting the processed data stream to the first Bluetooth device from the second Bluetooth device through the first Bluetooth connection comprise:
sending a handshake request to the first Bluetooth device from the second Bluetooth device;
confirming that the handshake between the first Bluetooth device and the second Bluetooth device succeeds; and
transmitting the compressed data stream to the first Bluetooth device from the second Bluetooth device.

8. The extended connection method as claimed in claim 1, wherein the steps of establishing the first Bluetooth connection between the first Bluetooth device and the second Bluetooth device that is in the salve mode comprise:
sending, by the first Bluetooth device, a connection request message according to prestored identification Information of the second Bluetooth device;
sending, by the second Bluetooth device, a corresponding connection response message when receiving the connection request message; and
sending, by the first Bluetooth device, a Frequency Hopping Synchronization (FHS) data packet when receiving the connection response message from the second Bluetooth device.

9. The extended connection method as claimed in claim 1, wherein the steps of establishing the first Bluetooth connection between the first Bluetooth device and the second Bluetooth device that is in the salve mode comprise:
sending, by the first Bluetooth device, an inquiry message;
allowing the second Bluetooth device to enter an inquiry scan state, and sending, by the second Bluetooth device, an inquiry response message when receiving the inquiry message sent from the first Bluetooth device; and
establishing a connection between the first Bluetooth device and the second Bluetooth device when the first Bluetooth device receives the inquiry response message from the second Bluetooth device.

10. An extended connection system for Bluetooth devices, comprising:
a first Bluetooth device set to a master mode;
a second Bluetooth device set to a slave mode; and
an external Bluetooth device set to a master mode, wherein
a first Bluetooth connection is established between the first Bluetooth device and the second Bluetooth device, and a second Bluetooth connection is established between the external Bluetooth device and the second Bluetooth device, wherein data transmission is carried out between the first Bluetooth device and the external Bluetooth device through the first Bluetooth connection and the second Bluetooth connection.

11. The extended connection system as claimed in claim 10, wherein the external Bluetooth device transmits a data stream to the second Bluetooth device through the second Bluetooth connection; the second Bluetooth device processes the received data stream; and the second Bluetooth device transmits the processed data stream to the first Bluetooth device through the first Bluetooth connection.

12. The extended connection system as claimed in claim 10, wherein the first Bluetooth connection is a transparent serial port connection based on a Serial Port Profile (SPP) protocol, and the second Bluetooth connection is a connection based on an Advanced Audio Distribution Profile (A2DP) protocol.

13. The extended connection system as claimed in claim 11, wherein the second Bluetooth device is configured to perform data compression on the received data stream.

14. The extended connection system as claimed in claim 13, wherein the second Bluetooth device sends a handshake request to the first Bluetooth device; a handshake between the first Bluetooth device and the second Bluetooth device succeeds, and the second Bluetooth device transmits the compressed data stream to the first Bluetooth device.

15. The extended connection system as claimed in claim 10, wherein the first Bluetooth sends a connection request message according to prestored identification Information of the second Bluetooth device; the second Bluetooth device sends a corresponding connection response message when receiving the connection request message; and the first Bluetooth device sends a Frequency Hopping Synchronization (FHS) data packet when receiving the connection response message from the second Bluetooth device.

16. The extended connection system as claimed in claim 15, wherein the identification information of the second Bluetooth device is prestored in the first Bluetooth device.

17. The extended connection system as claimed in claim 15, wherein the first Bluetooth device is provided with a slot for accommodating the second Bluetooth device, a PIN component is arranged in the slot, the second Bluetooth device is provided with a jack matching the PIN component, wherein the first Bluetooth device obtains the identification information of the second Bluetooth device by means of the PIN component.

18. The extended connection system as claimed in claim 10, wherein the first Bluetooth device sends an inquiry message, the second Bluetooth device enters an inquiry scan state, and sends an inquiry response message when receiving the inquiry message sent from the first Bluetooth device, and the first Bluetooth device establishes a connection with the second Bluetooth device when receiving the inquiry response message from the second Bluetooth device.

19. The extended connection system as claimed in claim 10, wherein the second Bluetooth device is a Bluetooth headset.

20. A computer readable storage medium, wherein the computer readable storage medium stores a computer program for performing the method according to any one of claims 1 to 9.
